# EUROPEAN PATENT APPLICATION

(11) **EP 4 850 836 A1**
(43) Date of publication of application: **09.12.2026**
(21) Application number: 26190461.9
(22) Date of filing: 18.12.2024
(51) Int. Cl.: B23D 29/00, B23D 35/00, B23D 17/02

(54) **THREADED ROD CUTTER**

(30) Priority: 25.12.2023 CN 202311805546; 25.12.2023 CN 202323541913 U; 25.12.2023 CN 202323547256 U
(62) Document number(s) of the earlier application(s) in accordance with Art. 76 EPC: 24220942.7 / 4 644 024
(71) Applicant: Zhejiang Prulde Electric Appliance Co., Ltd., Jinhua, Zhejiang 321035 (CN)
(72) Inventor: Yang, Chenghao, Zhejiang, 321035 (CN)
(74) Representative: karo IP

(57) **Abstract**

Disclosed is a threaded rod cutter (100), which relates to shearing equipment. The threaded rod cutter includes a shear assembly (10) and a drive assembly (40); the shear assembly includes a shear base (11), a stationary blade (18), a shear lever (12), a moving blade (19), a reset spring (3), a cam (13), and a roller (14). The drive assembly (40) includes an electric motor (41) for driving the cam and a speed reducer (42). An involute surface (132) is arranged on an outer peripheral surface of the cam (13). The involute surface (132) of the cam (13) engages the roller (14) to drive the shear lever (12) to swing, so that the shear lever (12) drives the moving blade (19) to be fitted with the stationary blade (18) to shear a threaded rod (17). Aa stationary threaded cutting edge (181) is provided on the stationary blade (18), and a moving threaded cutting edge (191) is provided on the moving blade (19). A notch (15) joining the stationary threaded cutting edge (181) is provided on a surface of the stationary blade (18) facing the moving blade (19), and/or a notch (15) joining the moving threaded cutting edge (191) is provided on a surface of the moving blade (19) facing the stationary blade (18). The notch (15) is configurable to receive chips produced from shearing the threaded rod (17).

## Description

### FIELD

The subject matter described herein relates to shearing equipment, and more particularly relates to a threaded rod cutter.

### BACKGROUND

An existing threaded rod cutter generally comprises a shear base, a stationary blade secured on the shear base, a shear lever, and a moving blade secured on the shear lever, the moving blade being fitted with the stationary blade to shear off a threaded rod. The Chinese Patent CN217749546U discloses a threaded rod cutter comprising a shear assembly and a drive assembly; the shear assembly comprises a shear base, a stationary blade secured on the shear base, a shear lever hinged to the shear base, a moving blade secured on the shear lever, a reset spring connected to the shear lever, a cam rotatably connected to the shear base, and a roller rotatably connected to the shear lever; the drive assembly comprises an electric motor actuating the cam to rotate and a speed reducer; engagement between an outer peripheral surface of the cam and an outer peripheral surface of the roller drives the shear lever to swing, so that the moving blade and the stationary blade are fitted to shear off a threaded rod. When the threaded rod cutter is in a ready-to-shear state, the roller engages a fillet of the cam and applies a large reacting force to the cam, so that the electric motor would experience an over large sudden flow of current upon energization, which likely damages the electric motor.

### SUMMARY

A threaded rod cutter described herein overcomes a problem of an existing threaded rod cutter that an electric motor thereof is easily damaged due to excessively large sudden flow of current upon energization.

A threaded rod cutter described herein comprises a shear assembly and a drive assembly, wherein:
the shear assembly comprises:
   (a) a shear base,
   (b) a stationary blade secured on the shear base,
   (c) a shear lever hinged to the shear base,
   (d) a moving blade secured on the shear lever,
   (e) a reset spring abutting against the shear lever,
   (f) a cam rotatably mounted on the shear base, and
   (g) a roller rotatably mounted on the shear lever;
and the drive assembly comprises an electric motor configured to drive the cam, and a speed reducer;
characterized in that a lower concave surface, an involute surface, and a circular fillet surface connecting the lower concave surface and the involute surface are arranged along a peripheral direction of the cam;
when the roller engages the lower concave surface, the threaded rod cutter is in a ready-to-shear state;
and when the roller rotates past the lower concave surface to engage the involute surface, the involute surface drives the shear lever to swing so that the shear lever drives the moving blade to be fitted with the stationary blade to shear a threaded rod.

The technical solution noted *supra* offers the following benefits: the lower concave surface, the involute surface, and the circular fillet surface are arranged in the peripheral direction of the cam; when the threaded rod cutter is in a ready-to-shear state, the roller engages the lower concave surface of the cam, without contacting the circular fillet surface, so that the electric motor would not experience an excessively large sudden flow of current upon energization when the threaded rod cutter is in the ready-to-shear state, which prevents the electric motor from being burnt out, thereby guaranteeing operating performance of the electric motor. To shear the threaded rod, the roller rotates past the circular fillet surface from the lower concave surface to engage the involute surface; the engagement between the involute surface and the roller may drive the shear lever to swing stably towards the shear base, leading to a more stable, precise shearing action with reduced friction during the shearing process, which may also provide a larger shear force in a case of shearing a harder or larger-diameter threaded rod. After rotating past the circular fillet surface from the lower concave surface, the roller engages the involute surface, which causes the roller to rotate more stably, reduces vibration and impact during the shearing process, and thusly enhances stability in power transmission. The drive assembly comprises an electric motor and a speed reducer; the electric motor may supply sufficient power during the shearing process and perform speed control efficiently; and the speed reducer can amplify the output torque to better satisfy shearing requirements.

The disclosure further provides a threaded rod cutter, comprising a shear assembly and a drive assembly, wherein:
the shear assembly comprises:
   (a) a shear base,
   (b) a stationary blade secured on the shear base,
   (c) a shear lever hinged to the shear base,
   (d) a moving blade secured on the shear lever,
   (e) a reset spring abutting against the shear lever,
   (f) a cam rotatably mounted on the shear base, and
   (g) a roller rotatably mounted on the shear lever;
and the drive assembly comprises an electric motor configured to drive the cam, and a speed reducer;
characterized in that an involute surface is arranged on an outer peripheral surface of the cam, the involute surface of the cam engaging the roller to drive the shear lever to swing, so that the shear lever drives the moving blade to be fitted with the stationary blade to shear a threaded rod;
a stationary threaded cutting edge is provided on the stationary blade, and a moving threaded cutting edge is provided on the moving blade;
a notch joining the stationary threaded cutting edge is provided on a surface of the stationary blade facing the moving blade, and/or a notch joining the moving threaded cutting edge is provided on a surface of the moving blade facing the stationary blade;
and the notch is configurable to receive chips produced from shearing the threaded rod.

The technical solution noted supra offers the following benefits: the threaded cutting edges on the stationary blade and the moving blade are both fitted with the threads on the threaded rod, which may prevent axial displacement of the threaded rod during shearing and can also enhance shearing precision with reduced burrs. The notch may receive the shearing-produced chips left between opposite surfaces of the stationary blade and the moving blade, thereby preventing chips-caused burrs from the sheared-off threaded rod, which may improve the sectional profile of the threaded rod.

The disclosure provides another threaded rod cutter, comprising a shear assembly and a drive assembly, wherein:
the shear assembly comprises:
   (a) a shear base,
   (b) a stationary blade secured on the shear base,
   (c) a shear lever hinged to the shear base,
   (d) a moving blade secured on the shear lever,
   (e) a reset spring abutting against the shear lever,
   (f) a cam rotatably mounted on the shear base, and
   (g) a roller rotatably mounted on the shear lever;
and the drive assembly comprises an electric motor configured to drive the cam, and a speed reducer;
characterized in that an involute surface is arranged on an outer peripheral surface of the cam, the involute surface of the cam engaging the roller to drive the shear lever to swing, so that the shear lever drives the moving blade to be fitted with the stationary blade to shear a threaded rod;
and the threaded rod cutter comprises a support base arranged proximal to the stationary blade and configured to support the threaded rod, the support base comprising a base body and a rotary member rotatably disposed on the base body, the rotary member being provided with at least two supporting recesses distributed about a central axis thereof, one of the supporting recesses may be selected by rotating the rotary member to support the threaded rod of a corresponding specification.

The technical solution noted *supra* offers the following benefits: the threaded-rod support base can be adapted to support threaded rods of different specifications and maintain stability of a threaded rod being sheared, which facilitates enhancement of threaded-rod shearing effect.

### BRIEF DESCRIPTION OF THE DRAWINGS

Fig. 1 is an overall schematic diagram of a threaded rod cutter;
Fig. 2 is a first exploded view of partial structure of the threaded rod cutter;
Fig. 3 is a schematic diagram of partial structure of the threaded rod cutter;
Fig. 4 is a second exploded view of partial structure of the threaded rod cutter;
Fig. 5 is a third exploded view of partial structure of the threaded rod cutter;
Fig. 6 is a side view of partial structure of the threaded rod cutter in a ready-to-shear state;
Fig. 7 is a side view of partial structure of the threaded rod cutter in a shearing state;
Fig. 8 is a side view of partial structure of the threaded rod cutter upon end of shearing;
Fig. 9 is a schematic diagram of a drive assembly in the threaded rod cutter;
Fig. 10 is a schematic diagram of engagement between a cam and a roller in the threaded rod cutter;
Fig. 11 is a schematic diagram of fitting between a moving blade and a stationary blade in the threaded rod cutter;
Fig. 12 is a local enlarged view of the moving blade or the stationary blade in the threaded rod cutter;
Fig. 13 is a local exploded view of a support base when a rotary member of the threaded rod cutter adopts a first solution;
Fig. 14 is a local structural view of the support base when the rotary member of the threaded rod cutter adopts the first solution;
Fig. 15 is a side view of the rotary member of the threaded rod cutter in the first solution;
Fig. 16 is a stereoscopic view of the rotary member of the threaded rod cutter in a second solution;
Fig. 17 is a side view of the rotary member of the threaded rod cutter in the second solution.

In the drawings: 100 - threaded rod cutter;
10 - shear assembly; 11 - shear base; 111 - first securing groove; 112 - threaded rod locating recess; 113 - shaft hole; 114 - rotary supporting hole; 12 - shear lever; 121 - swing supporting hole; 122 - second securing groove; 123 - locating surface; 13 - cam; 131 - central shaft; 132 - involute surface; 133 - lower concave surface; 134 - circular fillet surface; 135 - fillet angle; 14 - roller; 15 - notch; 151 - recessed portion; 152 - guide surface; 153 - discharge port; 16 - bolt; 161 - nut; 162 - limiting flange; 17 - threaded rod; 18 - stationary blade; 181 - stationary threaded cutting edge; 1811 - threaded slope surface; 182 - first securing hole; 19 - moving blade; 191 - moving threaded cutting edge; 192 - second securing hole;
2 - support base; 21 - base body; 22 - rotary member; 221 - middle raised portion; 23 - supporting recess; 231 - first supporting recess; 232 - second supporting recess; 233 - third supporting recess; 234 - fourth supporting recess; 235 - arcuate concave surface; 24 - central hole; 25 - central rotary shaft; 26 - pretensioned spring; 27 - rotary locating surface;
3 - reset spring;
40 - drive assembly; 41 - electric motor; 42 - speed reducer;
50 - housing.

### DETAILED DESCRIPTION OF EMBODIMENTS

Hereinafter, the technical solutions of the disclosure will be explained and illustrated through implementations with reference to the accompanying drawings. However, the implementations described herein are only some implementations of the disclosure, not all of them. Other implementations obtained by those skilled in the art based on the examples in the implementations without exercise of inventive work will all fall within the protection scope of the disclosure.

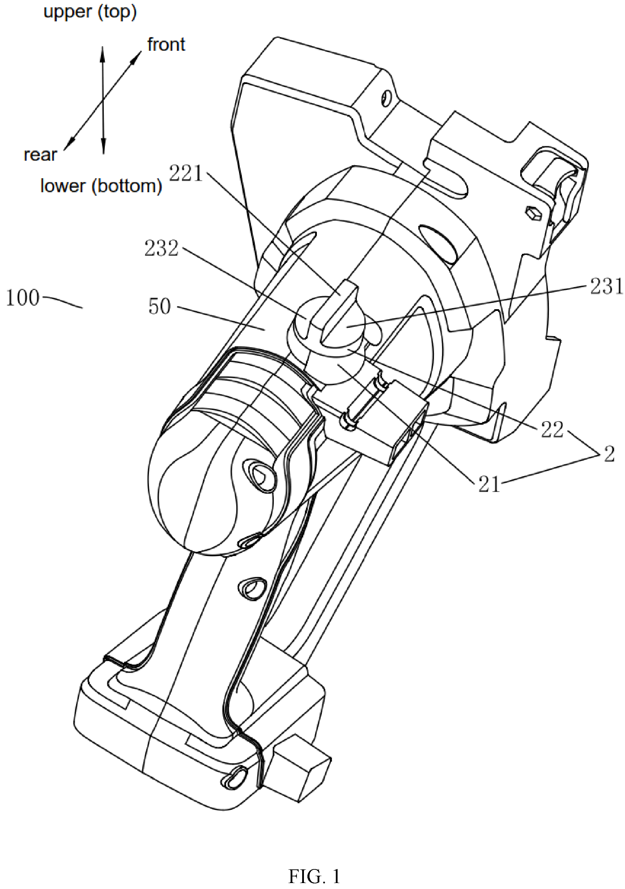

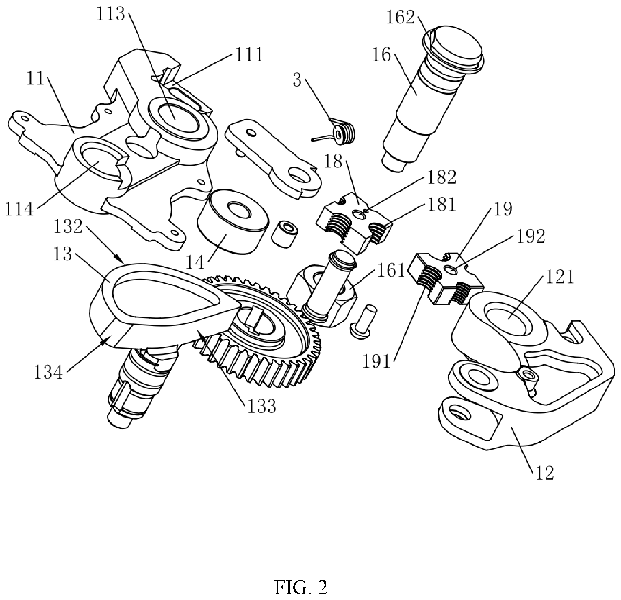

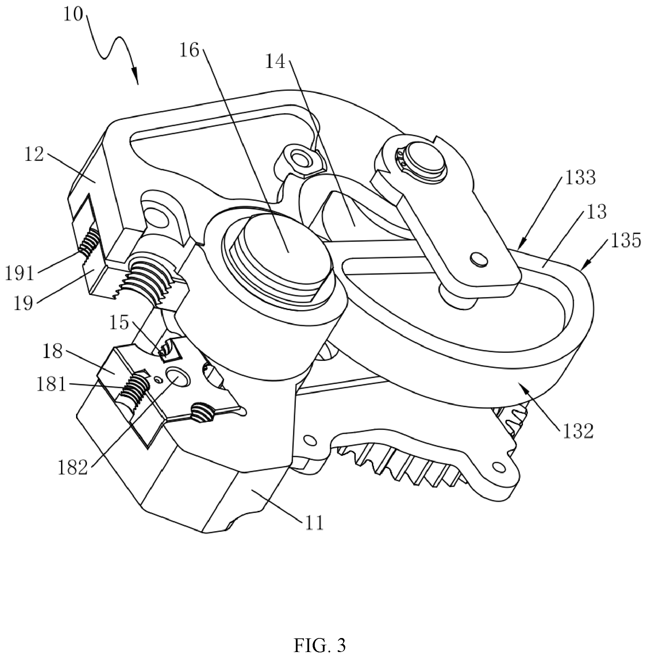

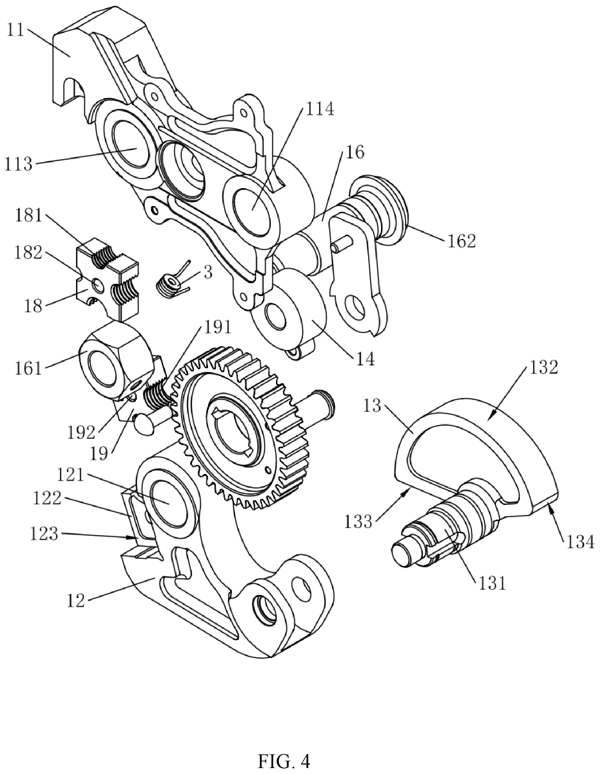

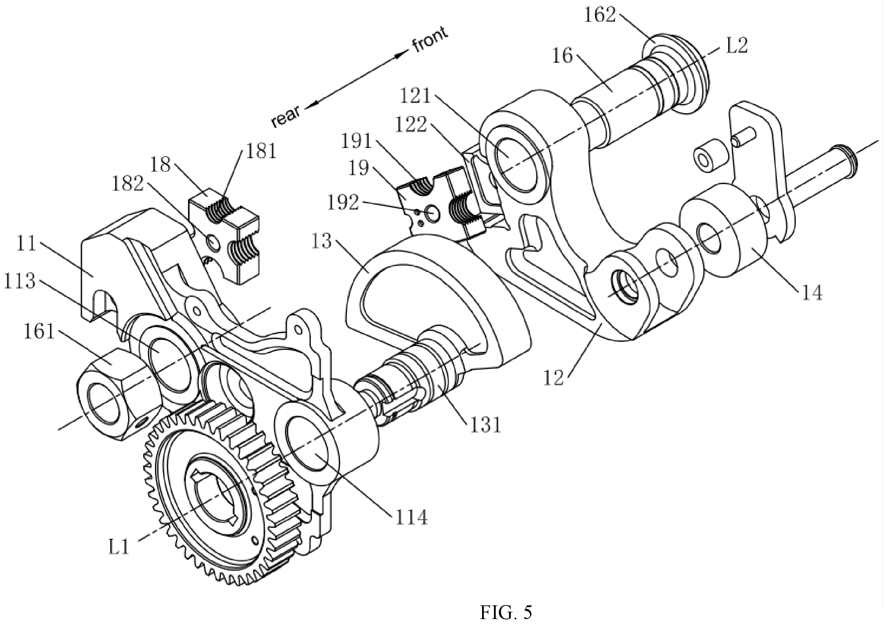

Referring to Figs. 1 through 10, a threaded rod cutter 100 according to this implementation comprises a shear assembly 10 and a drive assembly 20; the shear assembly 10 comprises a shear base 11, a stationary blade 18 secured on the shear base 11, a shear lever 12 hinged to the shear base 11, a moving blade 19 secured on the shear lever 12, a reset spring 3 abutting against the shear lever 12, a cam 13 rotatably mounted on the shear base 11, and a roller 14 rotatably mounted on the shear lever 12; the drive assembly 20 comprises an electric motor 41 configured to drive the cam 13, and a speed reducer 42; the cam 13 along a peripheral direction comprises a lower concave surface 133, an involute surface 132, and a circular fillet surface 134 connecting the lower concave surface 133 and the involute surface 132, a top end of the circular fillet surface 134 being a fillet angle 135. When the roller 14 engages the lower concave surface 133, the threaded rod cutter 100 is in a ready-to-shear state. When the roller 14 rotates past the circular fillet surface 134 to engage the involute surface 132, the involute surface 132 drives the shear lever 12 to swing, so that the moving blade 19 is driven to be fitted with the stationary blade 18 to shear a threaded rod 17.

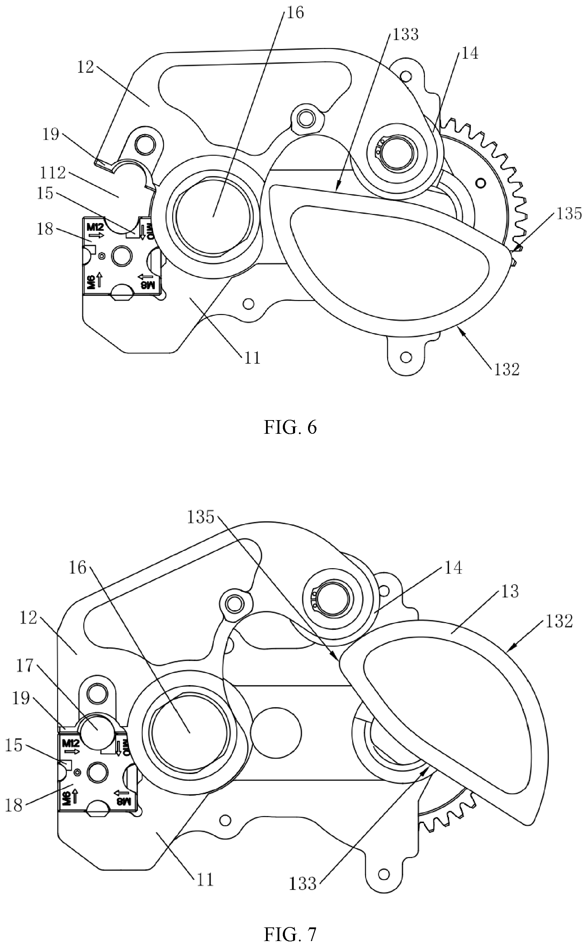

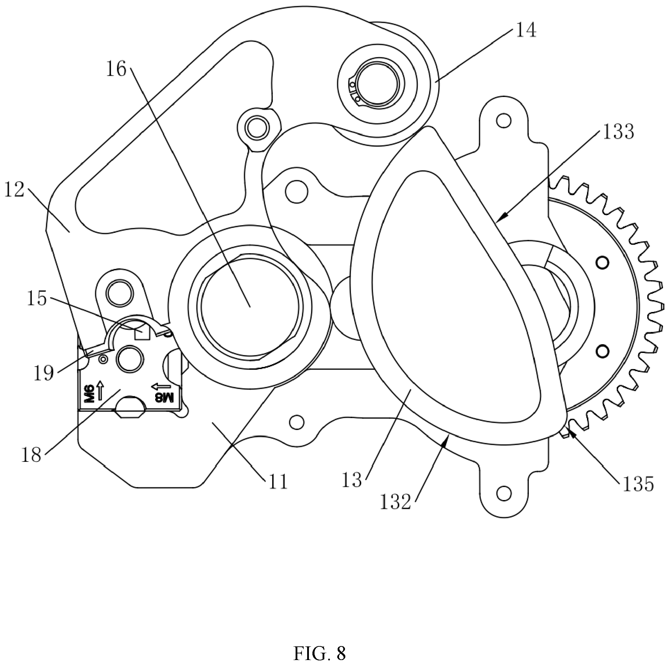

Referring to Fig. 6, when the threaded rod cutter 100 is in the ready-to-shear state, the roller 14 engages the lower concave surface 133 of the cam 13, the roller 14 and the cam 13 contacting at the lowest position, the stationary blade 18 and the moving blade 19 being in an opened state. Referring to Fig. 7, the threaded rod cutter 100 is in a shearing state, the stationary blade 18 and the moving blade 19 just meet the threaded rod 17, and the roller 14 has rotated past the fillet angle 135 at the instant, i.e., the roller 14 has rotated past the circular fillet surface 134 and engages the involute surface 132. Referring to Fig. 8, when the threaded rod cutter 100 is about to complete a shearing action, the engaged position between the roller 14 and the cam 13 is close to the tail end of the involute surface 132, where the shearing action is about to be completed.

In this implementation, the cam 13 may perform a circular movement about its own central axis L1 on the shear base 11; the shear lever 12 is hinged on the shear base 11 via a bolt 16; the shear lever 12 may swing reciprocatively about a central axis L2 of the bolt 16. The shear lever 12 is provided thereon with the rotatable roller 14; engagement between an outer peripheral surface of the cam 13 and an outer peripheral surface of the roller 14 may drive the shear lever 12 to swing, thereby driving the moving blade 19 to fit the stationary blade 18 to shear the threaded rod 17. In the ready-to-shear state, the roller 14 does not contact the fillet angle 135 of the cam 13; instead, the roller 14 rotates past the circular fillet surface 134 to engage the lower concave surface 133 of the cam 13; without contact between the roller 14 and the fillet angle 135 of the cam 13 when the threaded rod cutter 100 is in the ready-to-shear state, the electric motor 41 would not experience an excessively large sudden flow of current upon energization, which prevents the electric motor 41 from being burnt out. After the cam 13 rotates past the circular fillet surface 134, it is the involute surface 132 that is engaged with the roller 14, so that the shear lever 12 is driven smoothly, leading to a more stable, precise shearing action with reduced friction in the shearing process, which may also provide a larger shear force in a case of shearing a harder or larger-diameter threaded rod 17. The smooth movement of the roller 14 rotating past the lower concave surface 133 of the cam 13 can reduce vibration and impact during transmission, thereby improving smoothness of power transmission. Combination of the lower concave surface 133 and the involute surface 132 enables the threaded rod cutter 100 to be disposed in the ready-to-shear state or the shearing state at different positions, which enhances flexibility of the threaded rod cutter 100. The shear structure combined by the cam 13, the roller 14, the moving blade 19 and the stationary blade 18 can shear the threaded rod 17 in a stable and efficient manner. The electric motor 41 may supply sufficient power during the shearing process with effective speed control; the reducer 42 can amplify the output torque and flexibly adjust the shearing speed so as to be adapted to threaded rods 17 of different specifications and shearing requirements.

In this implementation, the reset spring 3 preferably adopts a torsion spring; a pin shaft configured to mount the reset spring 3 is provided in the threaded rod cutter 100, one support leg of the reset spring 3 abutting against the shear lever 12, an opposite support leg thereof abutting against the housing 50 of the threaded rod cutter 100. After the moving blade 19 and the stationary blade 18 are fitted to complete shearing of the threaded rod 17, the cam 13 suspends driving the shear lever 12, and the reset spring 3 recovered from deformation drives the shear lever 12 to reset.

In this implementation, the speed reducer 42 preferably adopts a planetary gear reducer, which not only plays a role of speed reduction to amplify the output torque like a conventional speed reduction mechanism, but also offers a higher precision, facilitating halting of the threaded rod cutter upon completion of one shearing action to replace a next threaded rod 17 ready for next shearing action. Conventionally, startup of the shearing action is actuated by manual control of a switch button; since the shearing action of the moving blade 19 is actuated by the cam 13, when the cam 13 rotates one circle, one full shearing action is completed. To directly detect a rotation travel of the cam 13, a corresponding sensor needs to be provided, which induces a high cost with an unguaranteed precision. Since one-circle rotation of the cam 13 corresponds to one-circle rotation of the planetary gear reducer, halting control upon completion of one shearing action may be realized by monitoring rotation of the planetary gear reducer.

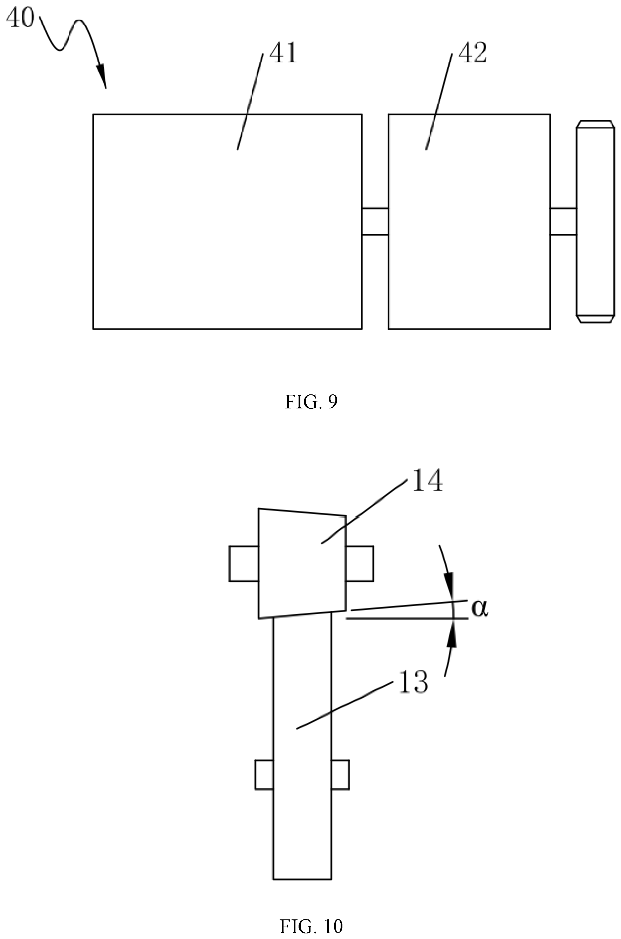

Referring to Fig. 10, the outer peripheral surface of the cam 13 engages the outer peripheral surface of the roller 14 by conical abutment with a taper angle α, where 3°≤α≤8°; the conical abutment allows for the cam 13, when rotating, to apply an axial component force on the roller 14; this axial component force gives the moving blade 19 an acting force directed towards the stationary blade 18 when shearing the threaded rod 17, so that the moving blade 19 may approach the stationary blade 18 as closely as possible when shearing the threaded rod 17; in this way, the moving blade 19 and the stationary blade 18 may be substantially conformingly fitted when shearing the threaded rod 17, preventing creation of a gap between the moving blade 19 and the stationary blade 18 when shearing the threaded rod 17; otherwise, the gap would lead to a jagged shear-off section of the sheared threaded rod 17.

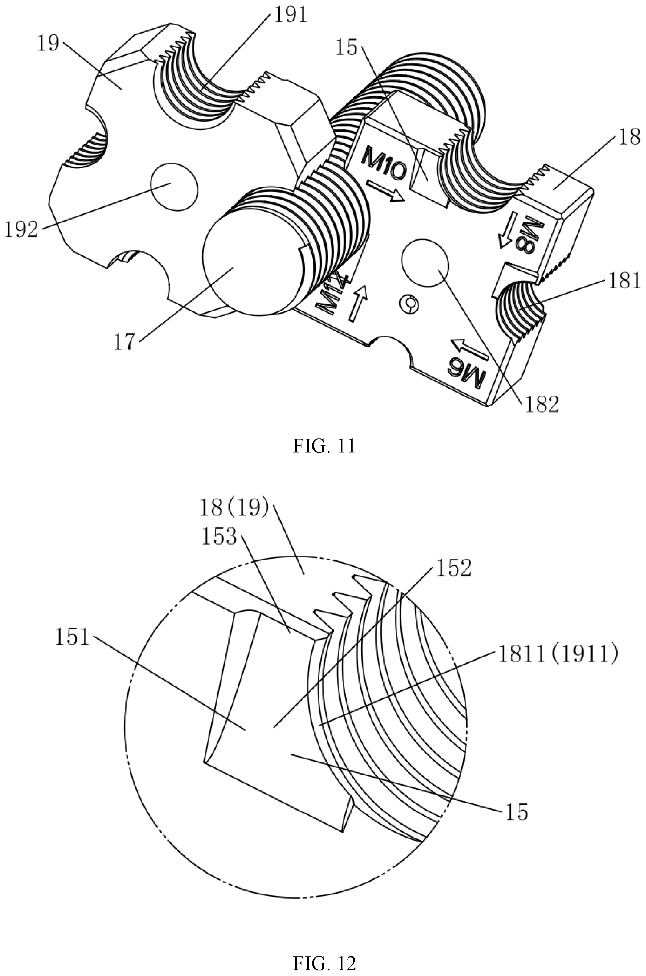

Referring to Figs. 11 and 12, in this implementation, a stationary threaded cutting edge 181 is provided on the stationary blade 18, and a moving threaded cutting edge 191 is provided on the moving blade 19. Furthermore, to facilitate discharging chips produced during shearing the threaded rod 17 without affecting the profile of the shear-off section of the threaded rod 17, notches 15 joining the threaded cutting edges are arranged on opposite surfaces of the stationary blade 18 and the moving blade 19, respectively, the notches 15 may receive the chips produced from shearing. In another implementation, the notch 15 may only be arranged on the stationary blade 18 or on the moving blade 19, or no notch 15 is provided on the stationary blade 18 or the moving blade 19.

Fig. 12 schematically illustrates an example of the notch 15 on the stationary blade 18, in which threads of the threaded cutting edges of the stationary blade 18 and the moving blade 19 being both fitted with threads on the threaded rod 17, which prevents the threaded rod 17 from axial displacement during shearing and thusly may improve shearing accuracy and precision with reduced burrs. The notch 15 may receive the chips produced from shearing the threaded rod 17, preventing the chips from residing between the stationary blade 18 and the moving blade 19, thereby preventing the cut-off threaded rod 17 from being burred due to the residual chips, which improves the section profile of the cut-off threaded rod 17.

Furthermore, the notch 15 joins a threaded sloped surface 1811, 1911 at an end portion of respective threaded cutting edge 181, 191. A gap is formed between the threaded sloped surface 1811, 1911 and an end surface of the corresponding stationary blade 18 or moving blade 19. On one hand, joining between the notch 15 and the threaded sloped surface 1811, 1911 may reduce chips produced during shearing and facilitate the chips casting off from the shear-off section of the threaded rod 17; on the other hand, the chips may also enter the notch 15 along the threaded sloped surface 1811, 1911, which facilitates removal of the shearing chips to prevent the chips from residing nearby respective threaded cutting edge.

Furthermore, a recessed portion 151 is arranged at a position of the notch 15 distal from the respective threaded cutting edge 181, 191, i.e., the position of the notch 15 distal from the threaded cutting edge has a large accommodation space, facilitating the chips to gather in the recessed portion 151, whereby more chips can be received, which mitigates friction between the blades and the chips and thus may prevent the shear-off section of the threaded rod from being burred.

Furthermore, a discharge port 153 is arranged for the notch 15 at a cutting side of the threaded cutting edge 181, 191, so that the chips in the notch 15 may be discharged via the discharge port 153, preventing excessive chips accumulated in the notch, further mitigating friction between the blades and the chips.

To guide the chips to be discharged via the discharge port 153, a guide surface 152 which is higher inward and lower outward and extends till the discharge port is arranged for the notch 15, the guide surface 152 being configured to guide the chips to the discharge port 153. Specifically, the guide surface 152 may be a cambered surface or a beveled surface. The guide surface 152 is configured to guide the chips in the notch 15 to flow to the discharge port 153; since the discharge port 153 is distal from the shear-off section of the threaded rod, no excessive chips would be accumulated in the notch, which facilitates their discharge without affecting the shearing effect of the threaded rod.

In this implementation, the notch 15 extends along the arc at one side of the outer periphery of the threaded cutting edge 181, 191, one end of the notch 15 being close to the middle point of the arc, an opposite end thereof extending till the discharge port 153. Since the threaded cutting edges 181, 191 extend helically, the profiles of the threaded sloped surfaces 1811, 1911 at opposite sides of the stationary blade 18 and the moving blade 19 also change in the arc direction of the threaded cutting edges, so that the notch 15 may be arranged at the wider side of respective threaded sloped surfaces 1811, 1911, whereby the chips may enter the notch 15 along respective threaded sloped surfaces 1811, 1911. Specifically, two mutually perpendicular sides are arranged at a position of the notch 15 distant from the arc of respective threaded cutting edge, so that the axial projection of the notch 15 is substantially of a rectangular trapezoid shape, the arc of the threaded cutting edge being located on a beveled side of the trapezoid, the discharge port 153 being located at the bottom side of the trapezoid, an end of the guide surface 152 proximal to the top side being higher than an end proximal to the bottom side. This design facilitates profiling (e.g., milling) the blades to form the notch 15; without considering the blade profiling factor, the notch 15 may also be designed as other shapes, which will not be detailed here.

Furthermore, the notch 15 on the stationary blade 18 and the notch 15 on the moving blade 19 are shaped identically. The notches 15 on the two blades may be combined to form a larger reception space to receive more chips. The notch 15 on the stationary blade 18 is located at the arc side of the stationary threaded cutting edge 181, while the notch 15 on the moving blade 19 is located at an opposite side of the arc of the moving threaded cutting edge 191, i.e., the notch on the stationary blade 18 and the notch on the moving blade 19 are distributed in a staggered manner; since the notches 15 on the two blades are spaced distantly in the peripheral direction of the threaded rod 17, chips produced from different shear-off section positions can be collected, which may further prevent the shear-off section of the threaded rod 17 from being burred. In another implementation, the notch 15 on the stationary blade 18 and the notch 15 on the moving blade 19 may be located at the same sides of the arcs of the threaded cutting edges.

In this implementation, to provide more shearing options, the stationary blade 18 is formed of a square structure with one stationary threaded cutting edge 181 being arranged on each of the four sides; the moving blade 19 is also formed of a square structure with one moving threaded cutting edge 191 being arranged on each of the four sides; the diameters of the four stationary threaded cutting edges 181 are different from one another, so are the diameters of the four moving threaded cutting edges 191. The four stationary threaded cutting edges 181 are arranged in one-to-one correspondence with the four moving threaded cutting edges 191 so as to be capable of shearing threaded rods 17 of four different specifications. Since the stationary blade 18 and the moving blade 19 are both formed of a square structure with a threaded cutting edge arranged on each side, it is ensured that the threaded rod cutter 100 is stressed uniformly during the shearing process, which reduces stress concentration and improves shearing precision. Since the four stationary threaded cutting edges 181 and the four moving threaded cutting edges 191 are different in sizes, they may be adapted to threaded rods 17 of different specifications so as to be adapted to different shearing requirements, whereby the threaded rod cutter 100 is capable of shearing threaded rods 17 of different diameters or specifications, which improves universality of the cutter. Since the diameters of the stationary threaded cutting edges 181 and the moving threaded cutting edges 191 are matched with the specification of the threaded rod 17, the shearing efficiency can be improved, the friction and resistance between the blades and the threaded rod 17 can be reduced, and the shearing speed can be accelerated.

Specifically, the diameters of the four stationary cutting edges 181 and the four moving threaded cutting edges 191 all increase or shrink sequentially in a clockwise direction or counterclockwise direction, i.e., the diameters of the stationary threaded cutting edges 181 and the moving threaded cutting edges 191 increase or shrink sequentially in a same direction, which can ensure stable fitting between the blades and the threaded rod 17 during the shearing process, thereby enhancing shearing stability. The sequential change of the diameters of the stationary threaded cutting edges 181 and the moving threaded cutting edges 191 may reduce accidental mismatch between the blades and the threaded rod 17, so that the threaded rod cutter 100 can be adapted to change between threaded rods 17 of different diameters more quickly while ensuring consistency between shearing trajectories.

In this implementation, a locating recess 112 is arranged at an edge of the shear base 11, and a first securing groove 111 facing the locating recess 112 is arranged at a front side of the shear base 11; the first securing groove 111 ensures mounting position of the stationary blade 18, thereby ensuring that substantially no gaps are left between the moving blade 19 and the stationary blade 18 when they are fitted to shear the threaded rod 17. Provision of the locating recess 112 allows for accurately locating the threaded rod 17 when being sheared, thereby ensuring accuracy of the shearing position. The locating recess 112 facilitates locating the threaded rod 17, preventing its swing or displacement during the shearing process, thereby improving shearing stability and reliability. The locating recess 112 facilitates placing and locating the threaded rod 17; meanwhile, the first securing groove 111 facilitates holding the stationary blade 18 to an appropriate position to thereby facilitate its mounting and adjustment.

In this implementation, a second securing groove 122 facing the threaded rod locating recess 112 is arranged at a rear side of the shear lever 12, the moving blade 19 being secured in the second securing groove 122; and a locating surface 123 is arranged at a front side surface of the shear base 11 above the locating recess 112. The second securing groove 122 allows for the moving blade 19 to be securely held on the shear lever 12, ensuring that the moving blade 19 does not get loose or offset during the shearing process, thereby enhancing shearing stability and accuracy. Provision of the locating surface 123 allows for the moving blade 19 to be accurately located above the sheared position of the threaded rod 17, which ensures an appropriate contact position between the moving blade 19 and the threaded rod 17, thereby enhancing shearing precision and efficiency.

A rotary supporting hole 114 and a shaft hole 113 are provided on the shear base 11, a bolt 16 is provided on the shear base 11, and a swing supporting hole 121 fitted with the bolt 16 is provided on the shear lever 12. A rear end of the bolt 16 passes through the swing supporting hole 121 and the shaft hole 113 on the shear base 11 and is attached with a nut 161; and a front end of the bolt 16 is provided with a limiting flange 162, the limiting flange 162 abutting against a front surface of the shear lever 12. The cam 13 is provided with a central shaft 131, the central shaft 131 being rotatably inserted in the rotary supporting hole 114. Of course, the central shaft 131 may also be rotatably mounted in the rotary supporting hole 114 via a bearing. It would be appreciated that the bolt 16 may be replaced with a pin shaft or another similar member.

In this implementation, securing holes connected via a fastening screw are provided at respective centers of the stationary blade 18 and the moving blade 19; the securing holes include a first securing hole 182 provided on the stationary blade 18 and a second securing hole 192 provided on the moving blade 19; the fastening screw being fitted with the first securing hole 182 and the second securing hole 192 respectively to securely attach the stationary blade 18 and the moving blade 19 to the cutter body, so that the stationary blade 18 and the moving blade 19 would not get loose leading to blade offset or falloff during the shearing process, thereby enhancing shearing stability. The first securing hole 182 and the second securing hole 192 connected via the fastening screw facilitate replacement of the stationary blade 18 and the moving blade 19, which simplifies the user's blade replacement operation, thereby enhancing blade replacement efficiency. The first securing hole 182 and the second securing hole 192 allow for the user to adjust the positions of the stationary blade 18 and the moving blade 19 by loosing or fastening the screw, which facilitates precise adjustment of the blades and ensures shearing accuracy and consistency.

Specifically, locating holes connected via a locating pin are provided at positions offset from the centers of the stationary blade 18 and the moving blade 19, respectively; the locating holes connected via the locating pin allow for accurately locating the stationary blade 17 and the moving blade 19, which ensures positions of the blades during the shearing process and enhances shearing accuracy. Fitting between the locating holes and the locating pin may mitigate swinging and rocking of the blades during the shearing process, reduce vibration of the blades, and enhance shearing stability. The fitting between the locating pin and the locating holes may also prevent accidental falloff or displacement of the blades, thereby enhancing shearing safety.

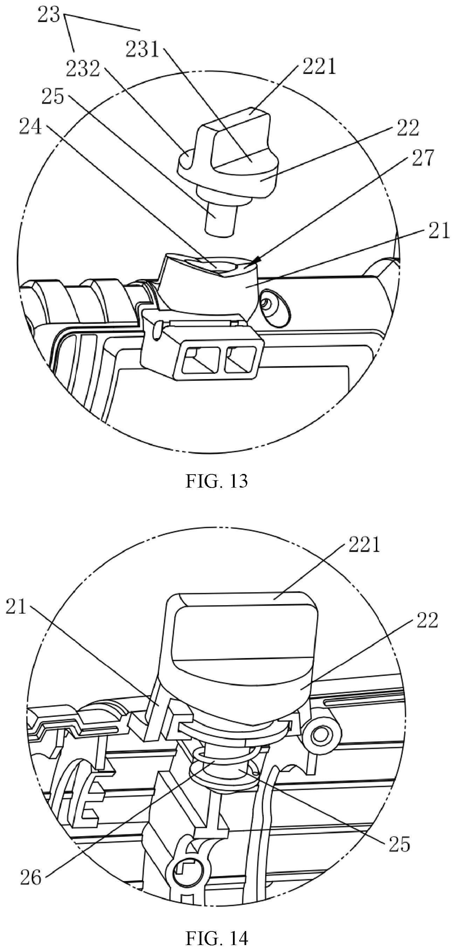

Referring to Figs. 13, 14 and 15, in a preferred implementation of the threaded rod cutter 100, the threaded rod cutter 100 further comprises a support base 2, the support base 2 having a rotary member 22, the rotary member 22 being provided with at least two supporting recesses 23 configured to support threaded rods 17 of different specifications. As threaded rods 17 of different specifications have different diameters while the centers of respective stationary threaded cutting edges 181 on the stationary blade 18 are fixed, one of the supporting recesses can be selected by rotating the rotary member 22 to support the threaded rod 17 of a corresponding specification; in this way, different supporting recesses may be selected by rotating the rotary member 22 to support threaded rods 17 of different specifications, which enhances adaptability and flexibility of the threaded rod cutter 100. The support base is configured to support the threaded rod 17, which ensures stable positioning of the threaded rod 17, thereby facilitating fitting between the moving blade 19 and the stationary blade 18 to shear the threaded rod 17.

To facilitate rotating the rotary member 22, in this implementation, a middle raised portion 221 is arranged on a top portion of the rotary member 22, and a first supporting recess 231 and a second supporting recess 232 configured to support threaded rods 17 of two different specifications are formed for the rotary member 22 at two opposite sides of the middle raised portion 221. During operation, the user may pinch the middle raised portion 221 with a single hand to rotate the rotary member 22 to select a supporting recess of an appropriate height, which facilitates adjustment of the rotary member 22 and may enhance shearing efficiency.

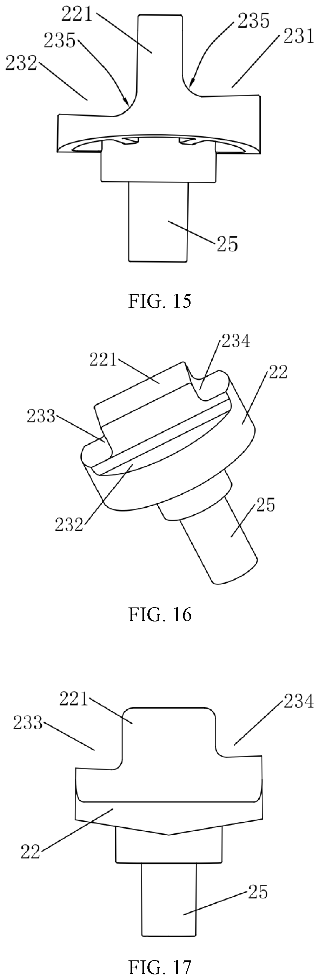

Referring to Figs. 16 and 17, to further expand the application scope of the threaded rod cutter 100, in a further preferred implementation, a third supporting recess 233 and a fourth supporting recess 234 are arranged at two lengthwise ends of the middle raised portion 221, respectively, so that the support base 2 may be adapted to more threaded rods 17 of different specifications.

To retain the rotary member 22 to a specific angle, the support base 2 further comprises a base body 21; a rotary locating surface 27 configured to retain relative position between the rotary member 22 and the base body 21 after the rotary member 22 rotates to a specified angle is arranged between the rotary member 22 and the base body 21, allowing for one of the supporting recesses to stably support the threaded rod 17 of a corresponding specification. Specifically, the rotary locating surface 27 may be arranged as a beveled surface, which may block the rotary member 22 from rotating freely; the locating surface 27 enhances the effect of locating the rotary member 22. After the rotary member 22 rotates to a specified angle, the rotary locating surface 27 automatically locks the position of the rotary member 22, thereby holding the relative position between the rotary member 22 and the base body 21, which offers stabler support to the threaded rod 17, allowing for the user to shift between the supporting recesses more quickly and conveniently.

A central hole 24 and a central rotary shaft 25 which are movably fitted are arranged between the rotary member 22 and the base body 21, and a pretensioned spring 26 is arranged between the rotary member 22 and the base body 21. Fitting between the central rotary shaft 25 and the central hole 24 facilitates free rotation of the rotary member 22, leading to smoother rotation of the rotary member 22, which realizes quick shift between the supporting recesses to support threaded rods 17 of corresponding specifications. The pretensioned spring 26 sleeves over the central rotary shaft 25, an upper end of the pretensioned spring 26 being fixed, a lower end thereof abutting against the central rotary shaft 25; the pretensioned spring 26 biases the rotary member 22 downwardly; the pretensioned spring 26 mainly plays a role of increasing an acting force of locking the rotary member 22 as well as a buffering role to reduce impact and vibration against the supporting recesses during the shearing process, thereby retaining the relative position between the rotary member 22 rotated to a specified angle and the base body 21, with mitigated wear to the supporting recesses. Sleeving of the pretensioned spring 26 over the central rotary shaft 25 may provide support to the pretensioned spring 26 and reduce swinging of the pretensioned spring 26, which ensures stability of the supporting recesses.

In another implementation, at least two pretensioned springs 26 may be arranged at intervals along the peripheral direction of the central rotary shaft 25, so that the threaded rod 17 can be supported more homogeneously, giving the rotary member 22 better support and buffer. When the threaded rod 17 is placed on a supporting recess, the rotary member 22 is subjected to a lateral force; provision of a plurality of pretensioned springs 26 may offer better support and buffer and reduce imbalanced stress leading to deteriorated shearing effect; in addition, the forces exerted to respective pretensioned springs 26 may also be evenly dispersed, preventing one single pretensioned spring 26 from receiving an excessively large load and being damaged, thereby facilitating extension of the service life of the pretensioned springs 26.

To ensure that the supporting recesses can support the threaded rod 17 stably, in this implementation, respective bottoms of the first supporting recess 231, the second supporting recess 232, the third supporting recess 233, and the fourth supporting recess 234 are all beveled surfaces inclining downward towards the center of the rotary member 22. The beveled surface may guide the threaded rod 17 to move towards the center of the rotary member 22 and reduce swinging of the threaded rod 17 during the shearing process, thereby stably limiting the threaded rod 17 in the corresponding supporting recess, which enhances accuracy of the shearing action.

It may be understood that, in another implementation, respective bottom walls of the first supporting recess 231, the second supporting recess 232, the third supporting recess 233, and the fourth supporting recess 234 may also be arranged as arcuate surfaces recessed downward towards the center of the rotary member 22, the arcuate surfaces offering a higher fit degree with the outer peripheral surface of the threaded rod 17, which may further reduce swinging of the threaded rod 17 and realize stabler support and more accurate shearing operation.

In this implementation, arcuate concave surfaces 235 are provided at positions where the first supporting recess 231 and the second supporting recess 232 join the middle raised portion 221. The arcuate concave surfaces 235 offer a higher fit degree with the outer peripheral surface of the threaded rod 17, which provides stabler support to the threaded rod 17 in the supporting recess.

The technical features in the implementations described *supra* may be arbitrarily combined without conflict, thereby forming different technical solutions.

In addition to the preferable implementations described supra, the present disclosure also has other implementations. All of such other implementations derived by those skilled in the art on the basis of those described herein without exercise of inventive work shall all fall within the scope of protection of the disclosure.

## Claims

1. A threaded rod cutter (100), comprising a shear assembly (10) and a drive assembly (40), wherein:
the shear assembly (10) comprises:
(a) a shear base (11),
(b) a stationary blade (18) secured on the shear base (11),
(c) a shear lever (12) hinged to the shear base (11),
(d) a moving blade (19) secured on the shear lever (12),
(e) a reset spring (3) abutting against the shear lever (12),
(f) a cam (13) rotatably mounted on the shear base (11), and
(g) a roller (14) rotatably mounted on the shear lever (12);
and the drive assembly (40) comprises an electric motor (41) configured to drive the cam (13), and a speed reducer (42);
**characterized in that** an involute surface (132) is arranged on an outer peripheral surface of the cam (13), the involute surface (132) of the cam (13) engaging the roller (14) to drive the shear lever (12) to swing, so that the shear lever (12) drives the moving blade (19) to be fitted with the stationary blade (18) to shear a threaded rod (17);
a stationary threaded cutting edge (181) is provided on the stationary blade (18), and a moving threaded cutting edge (191) is provided on the moving blade (19);
a notch (15) joining the stationary threaded cutting edge (181) is provided on a surface of the stationary blade (18) facing the moving blade (19), and/or a notch (15) joining the moving threaded cutting edge (191) is provided on a surface of the moving blade (19) facing the stationary blade (18);
and the notch (15) is configurable to receive chips produced from shearing the threaded rod (17).

2. The threaded rod cutter of claim 1, **characterized in that** the notch (15) joins a threaded sloped surface (1811, 1911) at an end portion of respective threaded cutting edges, wherein preferably a recessed portion (151) is provided at a position of the notch (15) distal from respective threaded cutting edges.

3. The threaded rod cutter according of claim 1 or 2, **characterized in that** a discharge port (153) is provided for the notch (15) at a cutting side of respective threaded cutting edges, so that chips in the notch (15) are discharged via the discharge port (153),
wherein preferably the notch (15) is provided with a guide surface (152) extending till the discharge port (153), the guide surface (152) being configured to guide the chips to the discharge port (153), and/or
wherein preferably the stationary blade (18) and the moving blade (19) are both provided with the notch (15), the notches (15) being shaped identically.

4. A threaded rod cutter (100) according to any of the preceeding claims;
wherein the threaded rod cutter (100) comprises a support base (2) arranged proximal to the stationary blade (18) and configured to support the threaded rod (17), the support base (2) comprising a base body (21) and a rotary member (22) rotatably disposed on the base body (21), the rotary member (22) being provided with at least two supporting recesses (23) distributed about a central axis thereof, one of the supporting recesses (23) may be selected by rotating the rotary member (22) to support the threaded rod (17) of a corresponding specification.

5. The threaded rod cutter of claim 4, **characterized in that** a middle raised portion (221) is arranged on a top portion of the rotary member (22), and the rotary member (22) is provided with a first supporting recess (231) and a second supporting recess (232) that are respectively arranged at two opposite sides of the middle raised portion (221),
wherein preferably a third supporting recess (233) and a fourth supporting recess (234) are arranged at two lengthwise ends of the middle raised portion (221), respectively.

6. The threaded rod cutter of claim 4 or 5, **characterized in that** a rotary locating surface (27) configured to hold position of the rotary member (22) having rotated to a specified angle relative to the base body (21) is arranged between the rotary member (22) and the base body (21), so that the threaded rod (17) of a corresponding specification is supported by one of the supporting recesses,
wherein preferably the rotary member (22) comprises a central rotary shaft (25), a central hole (24) configured to insert the central rotary shaft (25) is provided on the base body (21), and a pretensioned spring (26) configured to bias the rotary member (22) downward is arranged between the rotary member (22) and the base body (21).

7. The threaded rod cutter according to any of the preceding claims 4 - 6, **characterized in that** a bottom surface of each supporting recess (23) is formed of a beveled surface or a cambered surface gradually descending towards a center of the rotary member (22).

8. The threaded rod cutter according to any of the preceding claims 4 - 7, **characterized in that** an arcuate concave surface (235) is arranged at respective joints between the first supporting recess (231) and the middle raised portion (221) and between the second supporting recess (232) and the middle raised portion (221).
